# EUROPEAN PATENT APPLICATION

(11) **EP 4 464 728 A1**
(43) Date of publication of application: **20.11.2024**
(21) Application number: 23173952.5
(22) Date of filing: 17.05.2023
(51) Int. Cl.: C08G 18/08, C08G 18/12, C08G 18/32, C08G 18/34, C08G 18/42, C08G 18/75, C08G 18/79, C08L 75/02, C08L 75/06, C09D 175/02, C09D 175/06, C09J 175/02, C09J 175/06, C09D 133/00

(54) **ONE-COMPONENT WATERBASED TOPCOAT CONTAINING POLYURE-THANE DISPERSION**

(71) Applicant: Sika Technology AG, 6340 Baar (CH)
(72) Inventor: BARRATT, John, Preston, PR1 0EH (GB); BYRNE, Michael, Lytham, FY8 4TF (GB); GRIMSHAW, Georgina, Preston, PR5 6XG (GB); ROUND, Michelle, Leyland, PR25 3YB (GB)
(74) Representative: Sika Patent Attorneys

(57) **Abstract**

Subject of the invention is the use of a waterbased anionic polyurethane dispersion containing bis-urea groups of the formula (I) in a one-component waterbased topcoat for flooring applications, as well as a one-component waterbased topcoat composition further containing at least one acrylic dispersion with a minimum film forming temperature of 10 to 30 °C.

The polyurethane dispersion enables a one-component topcoat composition with low emission, attractive labelling, good workablity and high flexibility, with improved hardness, durability and stain resistance, which is particularly suitable for a floor protecting system.

## Description

### Technical field

One-component waterbased isocyanate-free topcoat for flooring applications enabling high hardness and durability at high flexibility.

### Background of the invention

Floor coatings based on curable compositions are widely used in the building industry. A typical floor coat is a system containing several coating layers, typically comprising one or more basecoats and a final topcoat. Typical basecoats are polyurethane or epoxy compositions, whereby polyurethane floors enable a particularly good impact noise dampening and are often used in indoor living areas, whereas epoxy floors enable a particularly high hardness and durability and are typically used in basement rooms, storage rooms or factory buildings.

The topcoat of a floor protecting system gives the final finish to the floor, particularly in terms of aesthetics and surface properties such as hardness, durability, water resistance and stain resistance. It further has to be compatible with the basecoat, mainly in terms of interlayer adhesion and chemical and mechanical compatibility. Further requirements to a high quality topcoat are good workability and flow properties, low emission properties and the absence of a hazard labelling caused by toxic ingredients.

Waterbased topcoats are particularly beneficial in terms of good workability at low emission. Waterbased topcoats with a highly durable surface are typically two-component products comprising a first component with a waterbased polyol, for example an OH-functional polyurethane dispersion, and a second component containing an emulsifiable polyisocyanate. An example of such a waterbased two-component topcoat composition is Sikafloor^{®}-304 W (from Sika). Unfortunately, the use of a polyisocyanate crosslinker as a separate component has severe disadvantages. The dosage and mixing of a two-component product is time consuming and prone to mistakes, a mixed portion of the product can only be applied within a limited time, and the polyisocyanate causes a hazard labelling.

Polyurethane dispersions enable polymer films of high hardness and elongation, whereby anionic polyurethane dispersions enable a particularly high robustness against humidity after cure. Anionic polyurethane dispersions are typically made in a process, wherein an isocyanate-functional polymer containing neutralized carboxylic groups is being dispersed in water and thereby chain extended with a diamine such as 1,2-ethanediamine. Anionic polyurethane dispersions with built-in hydroxyl groups obtained from chain extension with a hydroxyl-containing diamine are also known for the use in combination with a polyisocyanate as second component, for example from US 2003/0060589. The use of a polyurethane dispersion with incorporated hydroxyl groups in a one-component composition without mixing with a separate polyisocyanate component is not known from the state of the art.

### Summary of the invention

The task of the invention is to provide a waterbased polyurethane dispersion which enables a one-component waterbased topcoat for flooring applications with improved properties in terms of hardness, durability and stain resistance.

This task is surprisingly achieved with the use of a waterbased anionic polyurethane dispersion containing bis-urea groups of the formula (I) in a one-component topcoat as described in claim 1. It is most surprising that the hydroxyl group-containing bis-urea groups of the formula (I) enable an improved performance of a one-component topcoat composition. A person skilled in the art would expect, that the incorporated hydroxyl groups would weaken the water resistance and durability of the topcoat compared to a dispersion without incorporated hydroxyl groups. The inventive compositions C-1 and C-2 in the examples show the improved hardness (Young's modulus), taber abrasion, wet abrasion and stain resistance properties at high flexibility in comparison to a reference composition (C-3) containing a respective polyurethane dispersion without incorporated hydroxyl groups.

A further subject of the invention is a one-component waterbased topcoat composition comprising the polyurethane dispersion containing bis-urea groups of the formula (I) and at least one first acrylic dispersion **A1** with a minimum film forming temperature of 10 to 30 °C, preferably 15 to 25 °C, preferably in combination with a second acrylic dispersion **A2** with a minimum film forming temperature of more than 30 °C, preferably 40 to 60 °C. The inventive one-component topcoat composition is easy to prepare, free of hazard labels, storage stable and compatible with commercial polyurethane floor coatings such as e.g. Sikafloor^{®} 3000 (from Sika). It has excellent application properties with good flow and levelling properties, reliable and fast curing properties at ambient conditions and enables an even surface of high aesthetics, hardness and durability at high flexibility. It shows an improved hardness, durability against mechanical attack, stain resistance and water resistance, together with a high gloss, high flexibility, high impact resistance and high scratch resistance. The inventive topcoat composition is particularly suitable as topcoat for a floor protecting system, particularly a floor system containing a polyurethane basecoat.

Other aspects of the invention are described in other independent claims. Preferred aspects of the invention are described in dependent claims.

### Detailed description of the invention

The subject of the invention is the use of a waterbased anionic polyurethane dispersion containing bis-urea groups of the formula (I), 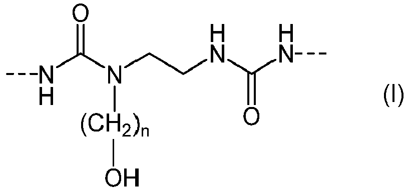 wherein n is 2 or 3, preferably 2,

in a one-component waterbased topcoat for flooring applications.

The term "waterbased" refers to a composition which contains the main polymer as a dispersion or emulsion in water and which contains a significant amount of water, typically more than 20 weight-% in relation to the total waterbased composition. The term "polyurethane dispersion" refers to a polyurethane polymer that forms a storage stable dispersion in water.

The term "polyurethane polymer" includes all polymers prepared by the so-called diisocyanate polyaddition process. Besides urethane groups they can also contain other groups, particularly urea groups.

The term "one-component" describes a composition such as a topcoat, of which all ingredients are stored in a single container with good storage stability and which is applied and cured without the addition of further reactive substances.

The term "storage stable" refers to the ability of a composition to be stored at room temperature in a suitable water-tight container for a certain time interval, in particular several months, without undergoing significant changes in application or enduse properties.

In this document, a dashed line in the formulas represents the bond between a substituent and the associated residue of the molecule.

The term "volatile" in this document includes all substances with a boiling point at atmospheric pressure below 250 °C.

The term "acrylic dispersion" includes all polymer dispersions with a polymer based on acrylate or methacrylate monomers. It includes acrylic polymers as well as acrylic copolymers such as styrene acrylic copolymers.

Substance names starting with "poly" such as polyol, polyamine or polycarbodiimide refer to substances carrying two or more of the respective functional groups per molecule.

The term "molecular weight" refers to the molar mass in g/mol of a molecule. The term "average molecular weight" refers to the number average molecular weight Mₙ of a polydisperse mixture of oligomeric or polymeric molecules. It is determined by means of gel permeation chromatography (GPC) against polystyrene as the standard.

In this document, the term "weight-%" or "wt.%" refers to the mass fraction of a constituent of a composition based on the entire composition, unless stated otherwise. The terms "weight" and "mass" are used synonymously in this document.

In this document "room temperature" refers to a temperature of 23°C.

All industry standards and norms mentioned in this document refer to the versions valid at the time of filing the first application, if not specified.

The polyurethane dispersion is used in a one-component waterbased topcoat for flooring applications. That means, all ingredients of the topcoat are stored in a single container with good storage stability and the topcoat is applied and cured without the addition of a further crosslinker such as a polyisocyanate in the form of a second component. The inventive use in a one-component topcoat allows a particularly easy use of the topcoat without any measuring or mixing steps and avoids a hazard labelling due to toxic further crosslinkers.

The polyurethane dispersion preferably contains polyester chains derived from at least one saturated polyester diol with a mean hydroxyl number of 28 to 225 mg KOH/g, preferably 35 to 112 mg KOH/g. Such a dispersion allows a high hardness combined with a high elongation after cure.

The polyurethane dispersion contains bis-urea groups of the formula (I).

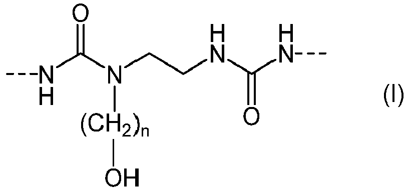

Such bis-urea groups are typically obtained from the reaction of two isocyanate groups with a diamine of the formula (II), 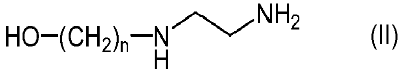 which is N-(2-aminoethyl)ethanolamine (AEEA) or N-(2-aminoethyl)-3-propanol-amine (AEPA).

Preferably, n is 2 and the diamine of the formula (II) is N-(2-aminoethyl)ethanolamine (AEEA).

The polyurethane dispersion may contain further bis-urea groups, particularly bis-urea groups of the formula 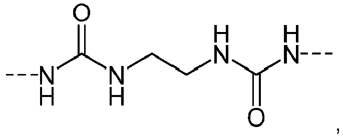 obtained from the reaction of further isocyanate groups with 1,2-ethanediamine.

Preferably, the molar content of bis-urea groups of the formula (I) in relation to the total molar content of bis-urea groups in the polyurethane dispersion is 0.25 to 1, preferably 0.4 to 1. That means, at least 25 %, preferably at least 40 %, of all the bis-urea groups are obtained from the reaction with N-(2-aminoethyl)ethanolamine or N-(2-aminoethyl)-3-propanolamine. This enables topcoats with a particularly good stain resistance and a particularly high resistance against abrasion.

The urea groups including the bis-urea groups of the formula (I) of the polyurethane dispersion are preferably derived from at least one diisocyanate, preferably at least one aliphatic diisocyanate, more preferably at least one cycloaliphatic diisocyanate. Suitable diisocyanates are the isomeric diphenylmethane diisocyanates (MDI), the isomeric toluene diisocyanates (TDI), 1 ,6-hexane diisocyanate (HDI), 2,2(4),4-trimethyl-1,6-hexane diisocyanate (TMDI), or preferably cycloaliphatic diisocyanates.

Preferred are cycloaliphatic diisocyanates selected from 1,3-cyclohexanediisocyanate, 1,4-cyclohexanediisocyanate, 1-methyl-2,4(6)-diisocyanatocyclohexane (H₆TDI), isophorone diisocyanate (IPDI), bis(4-isocyanatocyclohexyl)methane (H₁₂MDI), 1,3-bis(isocyanatomethyl)cyclohexane, 1,4-bis(isocyanatomethyl)-cyclohexane, m-xylylene diisocyanate and p-xylylene diisocyanate.

Particularly preferred is IPDI or H₁₂MDI, most preferred is H₁₂MDI.

The polyurethane dispersion is an anionic dispersion. This means, the dispersion contains incorporated anionic groups, which allow good dispersing properties and a stable dispersion.

Preferred anionic groups are deprotonated carboxy groups.

Particularly preferred anionic groups are derived from 2,2-bis(hydroxymethyl)propionic acid or 2,2-bis(hydroxymethyl)butanoic acid, neutralized with at least one volatile tertiary amine such as trimethylamine, triethylamine or triisopropylamine, particularly triethylamine. Such a dispersion has an excellent storage stability and curing behaviour.

Preferably, the content of anionic groups in the polyurethane dispersion is 0.1 to 1 mmol/g, preferably 0.2 to 0.5 mmol/g, based on the total solids content of the dispersion.

The waterbased anionic polyurethane dispersion preferably contains at least one solvent, preferably with a boiling point at atmospheric pressure of 120 to 250 °C, preferably 145 to 230 °C, preferably in an amount of 1 to 15 weight-%, more preferably 2 to 8 weight-%, based on the total dispersion.

Such a solvent can help in the preparation process of the dispersion and also acts as coalescing aid, helping the dispersed polyurethane particles to coalesce and form a homogeneous cured film upon application of the dispersion.

Preferably, the solvent is selected from the group consisting of diethylene glycol dimethylether, diethylene glycol diethylether, diethylene glycol di-n-butylether, dipropylene glycol dimethylether, propylene glycol diacetate, butylene glycol diacetate, propylene glycol methylether acetate, dipropylene glycol methylether acetate, 2,2,4-trimethyl-1,3-pentanediol monoisobutyrate, 2,5,7,10-tetraoxaunde-cane, 4,8-dimethyl-2,5,7,10-tetraoxaundecane, ethyl levulinate, butyl levulinate, levulinate propanediol ketal, N-methyl-pyrrolidone, N-ethyl-pyrrolidone, N-butyl-pyrrolidone, dihydrolevoglucosenone, dimethylsulfoxide, 3-methoxy-N,N-dimethyl-propanamide and 3-n-butoxy-N,N-dimethylpropanamide.

Particularly preferred thereof is dipropylene glycol dimethylether. This solvent is of low toxicity, low odour, easily available, shows good solving and diluting properties and is a good coalescing aid.

The polyurethane dispersion preferably has a solids content in relation to the total polyurethane dispersion of 20 to 60 weight-%, more preferably 25 to 50 weight-%, particularly 30 to 45 weight-%. The solids content can be determined by a calculation, whereby the volatile contents including water, volatile tertiary amine and solvent are counted off, or it can be determined by scale, whereby a spread out portion of the dispersion is being dried to a constant weight in an oven or with an infrared heater.

The waterbased anionic polyurethane dispersion is preferably obtained from a process comprising the steps of
a) reacting at least one carboxy group containing diol, at least one polyol with a mean hydroxyl number of 28 to 225 mg KOH/g, preferably 35 to 112 mg, and at least one diisocyanate in a molar NCO/OH ratio of 1.6 to 2.5, preferably 1.7 to 2.2, optionally in the presence of at least one solvent, to obtain an isocyanate-functional polymer with incorporated carboxy groups,
b) neutralizing of the obtained isocyanate-functional polymer, preferably by the addition of at least one volatile tertiary amine, preferably in a molar ratio of tertiary amine to carboxy groups in the range of 0.5 to 1.5, preferably 0.8 to 1.2,
c) dispersing the neutralized isocyanate-functional polymer in water,
d) immediately followed by reacting the remaining isocyanate groups by the addition of at least one diamine of the formula (II), 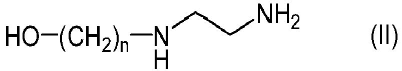 or a mixture of at least one diamine of the formula (II) and at least one further diamine.

A preferred carboxy group containing diol is 2,2-bis(hydroxymethyl)propionic acid (dimethylolpropionic acid, DMPA) or 2,2-bis(hydroxymethyl)butanoic acid (dimethy-lolbutanonic acid, DMBA). Particularly preferred is DMPA.

A preferred polyol with a mean hydroxyl number of 28 to 225 mg KOH/g, preferably 35 to 112 mg, is a saturated polyester polyol.

Preferred saturated polyester polyols are derived from the esterification of ε-caprolactam or from the esterification of at least one diol such as 1,2-ethane diol, diethylene glycol, 1,2-propane diol, dipropylene glycol, 1,4-butane diol, 1,5-pentane diol, 1,6-hexane diol, neopentyl glycol or 1,4-cyclohexane diol, with at least one diacid such as succinic acid, glutaric acid, adipic acid, suberic acid, sebacic acid, 1,12-dodecanedioic acid, hexahydrophthalic acid or hexahydroterephthalic acid. Preferred thereof are polyester diols from 1,6-hexane diol or neopentyl glycol and adipic acid, sebacic acid or 1,12-dodecanedioic acid.

Suitable diisocyanates are the isomeric diphenylmethane diisocyanates (MDI), the isomeric toluene diisocyanates (TDI), 1,6-hexane diisocyanate (HDI), 2,2(4),4-trimethyl-1,6-hexane diisocyanate (TMDI), or preferably cycloaliphatic diisocyanates, particularly 1,3-cyclohexanediisocyanate, 1,4-cyclohexanediisocyanate, 1-methyl-2,4(6)-diisocyanatocyclohexane (H₆TDI), isophorone diisocyanate (IPDI), bis(4-isocyanatocyclohexyl)methane (H₁₂MDI), 1,3-bis(isocyanatomethyl)cyclohexane, 1,4-bis(isocyanatomethyl)cyclohexane, m-xylylene diisocyanate or p-xylylene diisocyanate. Particularly preferred is IPDI or H₁₂MDI, most preferred is H₁₂MDI.

Step a) is preferably done at a temperature of 40 to 120 °C, preferably 60 to 100 °C, preferably in the presence of a suitable catalyst such as dibutyltin dilaurate, stannous octoate or the like.

Step a) is finished when most of the hydroxyl groups have reacted and the NCO-content of the reaction mixture has dropped to a constant value.

Step a) is preferably performed in the presence of at least one solvent, preferably a solvent with a boiling point in the range of 120 to 250 °C, preferably 145 to 230 °C, particularly the already mentioned ones. Such a solvent is preferably not removed from the dispersion after the process. The presence of a solvent helps to dissolve a carboxy group containing diol such as DMPA and helps in the dispersion step c) by lowering the viscosity of the neutralized polymer.

Preferably, the solvent content in the isocyanate-functional polymer at the end of step a) is 0 to 30 weight-%, preferably 5 to 15 weight-%, based on the total weight of the isocyanate-functional polymer and solvent.

The obtained reaction product of step a) may be cooled down to room temperature and stored in a suitable moisture tight container, where it is storage stable for several weeks or months. However, it is also possible to perform step b) and c) right after step a).

A preferred volatile tertiary amine for step b) is trimethylamine, triethylamine or triisopropylamine, particularly triethylamine.

Step b) is preferably done at a temperature of 10 to 100 °C, preferably 15 to 80 °C.

Step c) is preferably performed by mixing the neutralized polymer and water under vigorous stirring, whereby the water preferably has a temperature of 0 to 30 °C, preferably 4 to 25 °C, and the neutralized polymer preferably has a temperature of 20 to 100 °C, preferably 35 to 80 °C. In a batch process, the neutralized polymer can be added to the water, or vice versa. Preferably, the neutralized polymer is added to the water. Also preferred is a continuous process for step c) and d).

Step d) is performed right after step c) to ensure that the isocyanate groups are only in contact with water for a limited time.

The chain extension is done under good stirring by the addition of the diamine of the formula (II), which is preferably diluted in water. If the chain extension is done by a mixture of at least one diamine of the formula (II) and at least one further diamine, the amines may be mixed before addition, or they may be added immediately after each other, preferably in water diluted form.

The further diamine is preferably a primary diamine, preferably 1,2-ethanediamine, 1,3-propanediamine, 1,4-butanediamine, 1,5-pentanediamine or 1,6-hexanediamine, particularly 1,2-ethanediamine.

The diamine of the formula (II) and the optional further diamine in step d) are perferably used in a molar ratio of amine groups (primary or secondary) to isocyanate groups in the range of 0.5 to 1.1, preferably 0.7 to 1, more preferably 0.9 to 1. The molar ratio of the diamine of the formula (II) in relation to the total amount of diamine used is in the range of 0.25 to 1, preferably 0.4 to 1.

Preferred as diamine of the formula (II) is N-(2-aminoethyl)ethanolamine.

After chain extension in step d), a further step of removal of an optionally present solvent may be done to some extent, preferably by a distillation process. This is preferred in the case of a highly volatile solvent such as methyl ethyl ketone used during the process.

The total amount of water in the process is such, that the target solids content is finally achieved.

The waterbased anionic polyurethane dispersion is used in a one-component waterbased topcoat for flooring applications. This means, there is no further reactive substance added to the topcoat upon application of the topcoat. Such a one-component topcoat is particularly easy to apply without any metering or mixing steps. The polyurethane dispersion enables a particularly high hardness at high flexibility and a surface with an improved stain resistance, resistance against abrasion and wet abrasion. Such a topcoat is particularly suitable for a floor protecting system containing a polyurethane basecoat.

A further subject of the invention is a one-component waterbased topcoat composition comprising
- the waterbased anionic polyurethane dispersion containing bis-urea groups of the formula (I) as described above, and
- at least one acrylic dispersion **A1** with a minimum film forming temperature of 10 to 30 °C, preferably 15 to 25 °C, determined according to ASTM D2354.

Suitable acrylic dispersions **A1** are commercial acrylic polymer dispersions, whereby the acrylic polymer is preferably a reaction product of a radically initiated emulsion polymerization of at least one monomer selected from acrylic acid, methacrylic acid, acrylates and methacrylates, whereby other unsaturated monomers such as styrene, acrylonitrile or butadiene may additionally be present.

Preferred monomers are methyl methacrylate, methyl acrylate, acrylic acid and/or butyl acrylate.

The acrylic dispersion **A1** preferably has a solids content in relation to the total dispersion of 20 to 70 weight-%, more preferably 30 to 60 weight-%, particularly 35 to 50 weight-%.

The topcoat composition preferably contains such an amount of the acrylic dispersion **A1,** that the weight ratio between the solids from the polyurethane dispersion to the solids from the acrylic dispersion **A1** is 1/1 to 1/8, preferably 1/1.5 to 1/6. Such a topcoat has good film formation properties and enables a good balance between hardness, elongation and surface properties.

The minimum film forming temperature (MFFT) of the acrylic dispersion **A1** is 10 to 30 °C, preferably 15 to 25 °C. Such a dispersion is able to form a film by coalescence of the polymer particles upon evaporation of the volatile ingredients, mainly water, above its MFFT without the aid of further ingredients such as solvents or other coalescing agents.

An acrylic dispersion with a low MFFT typically cures to a softer film than an acrylic dispersion with a higher MFFT.

An acrylic dispersion with a low MFFT can act as coalescing agent for the polyurethane dispersion.

In a particularly preferred aspect of the invention, the one-component waterbased topcoat composition comprises at least one further acrylic dispersion **A2** with a minimum film forming temperature of more than 30 °C, preferably 40 to 60 °C, whereby the minimum film forming temperature is determined according to ASTM D2354.

Such a topcoat composition enables a particularly attractive balance between high hardness, good elongation, high abrasion resistance, scratch resistance and good stain resistance.

It is not evident from the state of the art, that such a specific combination of the polyurethane dispersion containing bis-urea groups of the formula (I), a first acrylic dispersion **A1** with a low MFFT and a second acrylic dispersion **A2** with a higher MFFT enables a one-component topcoat with such distinct benefits.

In such a topcoat composition, the weight ratio between the solids from the polyurethane dispersion to the solids from the acrylic dispersion **A1** is 1/1.5 to 1/6, preferably 1/2 to 1/4, and the weight ratio between the solids from the polyurethane dispersion to the solids from the acrylic dispersion **A2** is 1/1 to 1/4, preferably 1/1.5 to 1/3.

In a preferred aspect of the invention, the topcoat composition further contains at least one polycarbodiimide, preferably in an amount of 3 to 15 parts by weight of polycarbodiimide per 100 parts by weight of the combined solids from the polymer dispersions in the composition.

Preferred are commercially available polycarbodiimides, particularly emulsified polycarbodiimides in water, typically with a solids content of 20 to 60 weight-%, such as Picassian^{®} XL 702 (from Stahl Polymers).

The topcoat composition containing the polycarbodiimide is storage stable. The polycarbodiimide is able to react with COOH-groups and thereby further crosslink a polymer with incorporated carboxy groups. Upon application and curing of the topcoat, the volatile tertiary amine is evaporating, whereby neutralized carboxy groups are set free and are able to react with carbodiimide groups.

Preferably, the topcoat composition contains at least one further ingredient selected from the group consisting of solvents, defoamers, surfactants, matting agents, precipitated silica and biocides.

Preferred solvents are selected from the ones already mentioned with a boiling point at atmospheric pressure in the range of 120 to 250 °C, preferably 145 to 230 °C. Such solvents also act as coalescing agent.

Suitable defoamers are commercially available defoamers suitable for waterbased compositions, for example available from Byk. A preferred amount of defoamer is 0.01 to 5 weight-%, preferably 0.02 to 2 weight-%, based on the total composition.

Suitable matting agents are known commercially available matting agents for waterbased compositions. They allow a non-glossy look of the cured composition, which is sometimes preferred.

The incorporation of a precipitated silica enables a composition with a good workability and a transparent matt look. A preferred amount of precipitated silica is 0.5 to 10 weight-%, preferably 1 to 6 weight-%, based on the total composition.

The topcoat composition may contain further ingredients, particularly
- further polymeric dispersions,
- adhesion promoters, particularly organoalkoxy silanes, oligomeric silanes or titanates,
- fillers, such as ground or precipitated calcium carbonates (chalk), which are optionally surface coated with a fatty acid such as stearate, barium sulfate (barytes), slate, silicates (quartz), magnesiosilicates (talc), alumosilicates (clay, kaolin), dolomite, mica, glass bubbles, silicic acid, particularly fumed silica, carbon black, graphite, microspheres, calcium oxide, calcium hydroxide, aluminium oxide, aluminium hydroxide, magnesium oxide, magnesium hydroxide or zinc oxide,
- pigments, particularly titane dioxides, iron oxides or organic pigments,
- fibres, particularly glass fibres, carbon fibres, metallic fibres, ceramic fibres, plastic fibres, particularly polyamide fibres or polyethylene fibres, or natural fibres such as wool, cellulose, hemp or sisal,
- nanofibres such as graphene or carbon nanotubes,
- dyes,
- plasticizers, particularly phthalates, particularly diisononyl phthalate or diisodecyl phthalate, hydrogenated phthalates, terephthalates, hydrogenated terephthalates, trimellitates, adipates, azelates, sebacates, citrates, benzoates, glycol ethers, glycol esters such as triethylene glycol bis(2-ethylhexanoate), polyether polyols, organic sulfonates or phosphates, particularly diphenylcresyl phosphate or tris(2-ethylhexyl) phosphate, polybutenes, polyisobutenes or plasticizers obtained from natual fats or oils such as epoxidized soy or linseed oil,
- thickeners, such as bentonites, derivates of castor oil, hydrogenated castor oil, polyamides, polyamide waxes, polyurethanes, urea compounds, fumed silica, cellulose ethers or hydrophobically modified polyoxyethylenes,
- further additives such as wetting agents, flow enhancers, levelling agents, deaerating agents, antioxidants or stabilizers against UV or heat.

The topcoat composition preferably has a transparent matt or transparent glossy look after cure. Preferably, the topcoat composition contains at least one matting agent and has a transparent matt look after cure.

Preferably, the solids content of the topcoat composition is 20 to 60 weight-%, preferably 30 to 50 weight-%, based on the total weight of the topcoat composition.

Upon use, the topcoat composition is preferably applied by a brush, a roller or a spray equipment onto a substrate, preferably onto a floor, preferably onto a floor which is coated with a basecoat.

Preferably, the topcoat composition is applied in an amount to end up with a dried layer thickness of 0.01 to 1 mm, preferably 0.02 to 0.5 mm.

To get the desired dried layer thickness, the topcoat composition is preferably applied in an amount of 0.02 to 2 kg/m², preferably 0.03 to 1 kg/m², more preferably 0.05 to 0.5 kg/m². If a high layer thickness should be achieved, it can be beneficial to apply the topcoat composition in more than one layers.

The applied topcoat composition cures by evaporation of the volatile ingredients at ambient conditions, preferably 5 to 50 °C, preferably 10 to 30 °C, and 10 to 95 % relative humidity, preferably 20 to 80 % relative humidity. The main volatile ingredients are water, tertiary amine and optionally solvent.

Upon curing, the polymer particles form a film by coalescence, whereby some further crosslinking may take place, particularly by the reaction with an optionally contained polycarbodiimide.

Another subject of the invention is a method of coating comprising the steps of
i) applying the described one-component waterbased topcoat composition in an amount of 0.02 to 2 kg/m², preferably 0.03 to 1 kg/m², more preferably 0.05 to 0.5 kg/m², onto a substrate, followed by
ii) curing the applied topcoat composition by evaporation of the volatile contents at ambient conditions.

Suitable substrates are particularly
- glass, glass ceramics, concrete, mortar, cement screed, fiber cement, brick, plaster or natural stone such as granite or marble,
- repair or leveling compounds based on PCC (polymer-modified cement mortar) or ECC (epoxy-modified cement mortar),
- metals or alloys such as aluminium, iron, steel, copper or other non-ferrous metals, including surface treated metals such as galvanized or chrome-plated metals,
- asphalt or bitumen,
- leather, textiles, paper, wood, wood-composits or textile-composits bonded with phenolic resins, melamine resins or epoxy resins or other polymer-composites,
- plastics such as hard or soft PVC, polycarbonate, polystyrene, polyester, polyamide, PMMA, ABS, SAN, epoxy resins, phenolic resins, PUR, POM, TPO, PE, PP, EPM or EPDM, each untreated or surface-treated, for example by plasma, corona or flame,
- fiber-reinforced plastics such as carbon fiber reinforced plastics, glass fiber reinforced plastics, natural fiber reinforced plastics or sheet moulding compounds,
- insulating foams, in particular made of EPS, XPS, PUR, PIR, rock wool, glass wool, aerogel or foam glass,
- coated or painted substrates, such as painted concrete, powder-coated metals or painted sheet metals, or
- coatings, paints or varnishes.

The substrates are optionally surface treated before the self-crosslinking composition is applied, particularly by a physical or chemical cleaning process and/or by the application of a primer or an activator.

Preferably, the topcoat composition is applied onto a floor, preferably a floor which is coated with a basecoat.

Preferred basecoats are based on polyurethane, silane terminated polyurethane, epoxy, PVC, vinyl, linoleum, cork or another common floor coat material. Particularly preferred is the application onto a polyurethane basecoat.

Such a basecoat can be applied in one or more than one layers. It may contain coloured flakes, which were spread onto a freshly applied fluid basecoat for decorative purpose. It may further contain quartz sand, which was spread onto a freshly applied liquid basecoat in order to obtain a roughened, non-slip surface.

Another subject of the present invention is a floor system containing at least one basecoat and the cured topcoat obtained by evaporation of the volatile contents of the described topcoat composition at ambient conditions.

The basecoat preferably has a layer thickness of 1 to 5 mm.

A particularly preferred basecoat is a polyurethane basecoat, preferably a two-component polyurethane basecoat, which was applied in one or more than one layer to obtain the desired layer thickness.

The floor system is preferably indoor, preferably in an entrance hall, expedition hall, museum, university, hospital, shop, shopping center, school, office, gym, climbing hall or the like.

The described waterbased topcoat composition comprising the polyurethane dispersion with bis-urea groups of the formula (I) is particularly compatible for such a floor system, enabling good crack bridging properties in combination with a hard, durable and resistant surface.

### Examples

The following examples illustrate the present invention without being limitative. "Standard climate" means a temperature of 23±1°C and a relative atmospheric moisture of 50±5%. "Nc" means "normal climate".
"pbw" means "parts by weight".

"MFFT" means "minimum film forming temperature".

### Preparation of a neutralized isocyanate-functional polymer:

### Polymer-1:

101.7 pbw of dipropylene glycol dimethylether (Proglyde^{®} DMM, from Dow), 40.1 pbw of 2,2-dihydroxymethylpropionic acid (DMPA) and 547.9 pbw of a linear saturated polyester diol with an OH-number of 56 mg KOH/g (Bester 127, from Dow) were placed in a round bottom flask under nitrogen atmosphere and heated under good stirring to 60 °C. Then, 279.8 pbw of bis(4-isocyanatocyclohexyl)methane (Desmodur^{®} W, from Covestro) and 0.4 pbw stannous octoate were added and the mixture was heated under constant stirring to 90 °C for 2 hours, whereby the NCO-content dropped to 4.2 weight-%. The so obtained isocyanate-functional polymer was then cooled down to 70 °C and 30.2 pbw of triethylamine were added under good stirring, thereby neutralizing the carboxy groups to become anionic.

### Preparation of anionic polyurethane dispersions:

### Dispersion PUD-1:

538.2 pbw of water were placed in a round bottom flask at a temperature of 17 °C. Then 386.1 pbw of the neutralized isocyanate-functional **Polymer-1,** prepared as described above, was added with a temperature of 70 °C under good stirring, whereby a milky dispersion was formed, immediately followed by the addition of a solution of 19.2 pbw of N-(2-aminoethyl)ethanolamine (AEEA) in 60.5 pbw of water under maintained good stirring.

The obtained anionic polyurethane dispersion was a milky white fluid with a solids content of approx. 35 weight-%. It was fully chain extended with AEEA, whereby bis-urea groups of the formula (I) with n = 2 were formed.

### Dispersion PUD-2:

The dispersion **PUD-2** was prepared in the same way as the dispersion **PUD-1,** whereby instead of 19.2 pbw of N-(2-aminoethyl)ethanolamine (AEEA) in 60.5 pbw of water, a solution of 9.6 pbw of N-(2-aminoethyl)ethanolamine (AEEA) and 5.5 pbw of 1,2-ethanediamine (EDA) in 60.5 pbw of water was added.

The obtained anionic polyurethane dispersion was a milky white fluid with a solids content of approx. 35 weight-%. It was chain extended by AEEA and EDA in a molecular ratio of 1:1, which means, about 50 % of the number of the obtained bis-urea groups were bis-urea groups of the formula (I) with n = 2.

### Dispersion PUD-3 (Reference):

The dispersion **PUD-3** was prepared in the same way as the dispersion **PUD-1,** whereby instead of 19.2 pbw of N-(2-aminoethyl)ethanolamine (AEEA) in 60.5 pbw of water, a solution of 11.1 pbw of 1,2-ethanediamine (EDA) in 60.5 pbw of water was added.

The obtained anionic polyurethane dispersion was a milky white fluid with a solids content of approx. 35 weight-%. It was fully chain extended by EDA and therefor free of bis-urea groups of the formula (I), being a reference example.

### Used acrylic dispersions:

The acrylic dispersions used in the experiments are commercial dispersions with a different minimum film forming temperature (MFFT), as listed in Table 1.

**Table 1: used commercial acrylic dispersions**

| **abbreviation** | **brand name** | **polymer type** | **MFFT** | **solids content** | **supplier** |
|---|---|---|---|---|---|
| **ACD-1** | Acronal^{®} A 754 | acrylic copolymer | 17°C | 48 wt.% | BASF |
| **ACD-2** | Orgal^{®} F 4050 | acrylic copolymer | 49°C | 40 wt.% | Organik Kimya |
| **ACD-3** | Joncryl^{®} 8330 | self-crosslinking acrylic polymer | 33°C | 38 wt.% | BASF |

### One-component waterbased topcoat compositions:

The ingredients of each composition **C-1** to **C-7** as given in Table 2 in the given amounts (parts by weight) were thoroughly mixed until homogenous and stored in a sealed container.

The compositions **C-1** and **C-2** are topcoat compositions containing a polyurethane dispersion containing bis-urea groups of the formula (I), a first acrylic dispersion with a MFFT of 17 °C and a second acrylic dispersion with a MFFT of 49 °C. The composition **C-3 (Ref.)** is a reference composition wherein the polyurethane dispersion is not chain extended with AEEA and is therefore free of bis-urea groups of the formula (I). The compositions **C-5 (Ref.)** and **C-6 (Ref.)** are reference compositions containing only an acrylic dispersion with a MFFT of more than 30 °C. The composition **C-7 (Ref.)** is a reference composition without polyurethane dispersion.

Each composition was applied as coating onto an aluminium panel in a wet film thickness of 130 µm (resulting in a dry film thickness of 50 to 60 µm). Each film was then stored in standard climate and measured for Persoz hardness (pendulum hardness) according to ASTM D4366 after 4 d curing time.

The film aspect was visually judged from the film prepared for Persoz hardness determination after a curing time of 7 d in standard climate. "transp. mat" means, that the film had an even, transparent mat look with a dry surface. "cracked film" means, that the film contained cracks. Such films were not further tested.

The taber abrasion was determined on a 100 mm x 100 mm aluminium panel coated with a 2 mm layer of cured Sikafloor^{®} 3000 (commercial two-component polyurethane floor coating, from Sika), which was overcoated in a wet film thickness of 130 µm (resulting in a dry film thickness of 50 to 60 µm) after a curing time of 4 d in standard climate. The abrasion test was performed with a Taber 5151 Abraser equipment, CS10 abrasive wheels at a 1 kg weight loading, measuring the weight loss after 500 cycles. A low weight loss indicates a high abrasion resistance.

The wet abrasion was determined on a coated aluminium panel in a wet film thickness of 130 µm (resulting in a dry film thickness of 50 to 60 µm) after a curing time of 4 d in standard climate, brushed with a detergent water solution, using an

Elcometer 1720 Abrasion tester at a speed of 37 cycles/min. The weight loss after 500 cycles was determined and is indicated in Table 2. A low weight loss indicates a high water resistance.

The storage stability of the composition was determined after 2 months storage of the freshly prepared composition in a sealed container at standard climate followed by judging the aspect of the composition for inhomogeneities or lumps and determination of the Persoz hardness as described before. If no relevant differences compared to the freshly prepared composition occurred, storage stability was rated as "good".

The mechanical properties tensile str. (tensile strength), elongation at break and Young's modulus were determined according to ISO 527-2 at a crosshead speed of 120 mm/min with dumbbell-shaped samples 5A in a layer thickness of 0.45 mm after a curing time of 4 d in standard climate.

The stain resistance properties were determined on a Byko-Chart Opacity Display 5C, coated in a wet film thickness of 130 µm (resulting in a dry film thickness of 50 to 60 µm) after a curing time of 4 d in standard climate, by dropping 3 drops of each medium given in Table 2 onto the cured film, followed by wiping off the spot after 24 h in standard climate, cleaning the spotted area with detergent water and wiping it dry. Thereafter, the film was judged for permanent marks with the following rating: 0 = untouched film, 1 = light staining, 2 = heavy staining, 3 = light cracking.

The compositions named with **(Ref.)** are reference examples.

The results are given in Table 2.

**Table 2: Composition and properties of the compositions C-1 to C-7.**

| **Composition:** | | **C-1** | **C-2** | **C-3 (Ref.)** | **C-4** | **C-5 (Ref.)** | **C-6 (Ref.)** | **C-7 (Ref.)** |
|---|---|---|---|---|---|---|---|---|
| polyurethane dispersion | | **PUD-1** 18 | **PUD-2** 18 | **PUD-3** 18 | **PUD-2** 18 | **PUD-2** 18 | **PUD-2** 18 | - |
| acrylic dispersions | | **ACD-1** 36 | **ACD-1** 36 | **ACD-1** 36 | **ACD-1** 72 | **ACD-3** 72 | **ACD-2** 72 | **ACD-1** 45 |
| | | **ACD-2** 36 | **ACD-2** 36 | **ACD-2** 36 | | | | **ACD-2** 45 |
| defoamer/surfactant | | 2 | 2 | 2 | 2 | 2 | 2 | 2 |
| solvent ¹ | | 3 | 3 | 3 | 3 | 3 | 3 | 3 |
| matting agent | | 0.5 | 0.5 | 0.5 | 0.5 | 0.5 | 0.5 | 0.5 |
| precipitated silica | | 3 | 3 | 3 | 3 | 3 | 3 | 3 |
| water | | 1.5 | 1.5 | 1.5 | 1.5 | 1.5 | 1.5 | 1.5 |
| polycarbodiimide ² | | 3 | 3 | 3 | 3 | 3 | 3 | 3 |
| calculated solids content [wt.%] | | 45 | 45 | 45 | 48 | 41 | 42 | 47 |
| Persoz hardness [s] | | 123 | 136 | 137 | 86 | n.d. | n.d. | 129 |
| film aspect | | transp. mat | transp. mat | transp. mat | transp. mat | cracked | cracked | transp. mat |
| taber abrasion [mg] | | 20 | 16 | 62 | 50 | n.d. | n.d. | 51 |
| wet abrasion [mg] | | 77 | 116 | 161 | 230 | n.d. | n.d. | 129 |
| storage stability | | good | good | good | good | n.d. | n.d. | good |

| **mech. properties:** | | | | | | | | |
|---|---|---|---|---|---|---|---|---|
| | tensile str. [MPa] | 6.5 | 8.0 | 6.1 | 5.5 | | | 6.9 |
| | elongation [%] | 174 | 115 | 105 | 322 | n.d. | n.d. | 108 |
| | Young's modulus [MPa] | 382 | 321 | 139 | 20 | | | 170 |

| **stain resistance:** | | | | | | | | |
|---|---|---|---|---|---|---|---|---|
| | coffee | 1 | 1 | 1 | 2 | | | 2 |
| | tea | 1 | 0 | 1 | 2 | | | 1 |
| | red wine | 0 | 0 | 1 | 0 | n.d. | n.d. | 0 |
| | 10% NaOH | 1 | 1 | 2 | 2 | | | 3 |
| | water | 0 | 0 | 1 | 1 | | | 2 |

| | | | | | | | | |
|---|---|---|---|---|---|---|---|---|
| ¹ dipropylene glycol dimethylether (Proglyde^{®} DMM, from Dow) ² 40 wt.% in water (Picassian^{®} XL 702, from Stahl Polymers) "n.d." means "not determined" (cracked film) | | | | | | | | |

Table 2 shows the improved properties of the compositions **C-1** and **C-2,** particularly in terms of better abrasion properties, higher water resistance, higher Young's modulus and improved stain resistance.

## Claims

1. Use of a waterbased anionic polyurethane dispersion containing bis-urea groups of the formula (I), 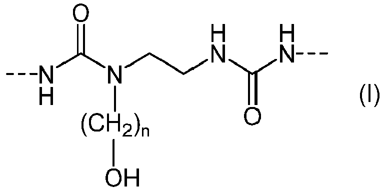 wherein n is 2 or 3, preferably 2,
in a one-component waterbased topcoat for flooring applications.

2. The use according to claim 1, wherein the polyurethane dispersion contains polyester chains derived from at least one saturated polyester diol with a mean hydroxyl number of 28 to 225 mg KOH/g, preferably 35 to 112 mg KOH/g.

3. The use according to any of claims 1 or 2, wherein the polyurethane dispersion contains urethane and urea groups derived from at least one diisocyanate, preferably at least one aliphatic diisocyanate, more preferably at least one cycloaliphatic diisocyanate.

4. The use according to any of claims 1 to 3, wherein the anionic groups of the polyurethane dispersion are derived from 2,2-bis(hydroxymethyl)propionic acid or 2,2-bis(hydroxymethyl)butanoic acid, neutralized with at least one volatile tertiary amine, particularly triethylamine.

5. The use according to any of claims 1 to 4, wherein the polyurethane dispersion contains at least one solvent, preferably with a boiling point at atmospheric pressure of 120 to 250 °C, preferably in an amount of 1 to 10 weight-%, more preferably 2 to 6 weight-%, based on the total dispersion.

6. The use according to any of claims 1 to 5, wherein the polyurethane dispersion is obtained from a process comprising the steps of
a) reacting at least one carboxy group containing diol, at least one saturated polyester polyol with a mean hydroxyl number of 28 to 225 mg KOH/g, preferably 35 to 112 mg KOH/g, and at least one diisocyanate in a molar NCO/OH ratio of 1.6 to 2.5, preferably 1.7 to 2.2, optionally in the presence of at least one solvent, to obtain an isocyanate-functional polymer with incorporated carboxy groups,
b) neutralizing of the obtained isocyanate-functional polymer, preferably by the addition of at least one volatile tertiary amine,
c) dispersing the neutralized isocyanate-functional polymer in water,
d) immediately followed by reacting the remaining isocyanate groups by the addition of at least one diamine of the formula (II), 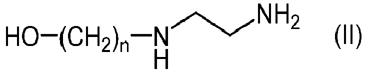 or a mixture of at least one diamine of the formula (II) and at least one further diamine.

7. One-component waterbased topcoat composition comprising
- the waterbased anionic polyurethane dispersion containing bis-urea groups of the formula (I) as descirbed in any of claims 1 to 6, and
- at least one acrylic dispersion **A1** with a minimum film forming temperature of 10 to 30 °C, preferably 15 to 25 °C, determined according to ASTM D2354.

8. The topcoat composition according to claim 7, wherein the weight ratio between the solids from the polyurethane dispersion to the solids from the acrylic dispersion **A1** is 1/1 to 1/8, preferably 1/1.5 to 1/6.

9. The topcoat composition according to any of claims 7 or 8, wherein the composition comprises at least one further acrylic dispersion **A2** with a minimum film forming temperature of more than 30 °C, preferably 40 to 60 °C, whereby the minimum film forming temperature is determined according to ASTM D2354.

10. The topcoat composition according to claim 9, wherein the weight ratio between the solids from the polyurethane dispersion to the solids from the acrylic dispersion **A1** is 1/1.5 to 1/6, preferably 1/2 to 1/4, and the weight ratio between the solids from the polyurethane dispersion to the solids from the acrylic dispersion **A2** is 1/1 to 1/4, preferably 1/1.5 to 1/3.

11. The topcoat composition according to any of claims 7 to 10, wherein the composition further contains at least one polycarbodiimide, preferably in an amount of 3 to 15 parts by weight of polycarbodiimide per 100 parts by weight of the combined solids from the polymer dispersions in the composition.

12. The topcoat composition according to any of claims 7 to 11, wherein the composition contains at least one further ingredient selected from the group consisting of solvents, defoamers, surfactants, matting agents, precipitated silica and biocides.

13. Method of coating comprising the steps of
i) applying the topcoat composition according to any of claims 7 to 12 in an amount of 0.02 to 2 kg/m², preferably 0.03 to 1 kg/m², more preferably 0.05 to 0.5 kg/m², onto a substrate, followed by
ii) curing the applied topcoat composition by evaporation of the volatile contents at ambient conditions.

14. Method according to claim 13, wherein in step i) the topcoat composition is applied onto a floor, preferably a floor which is coated with a basecoat.

15. Floor system containing at least one basecoat and the cured topcoat obtained by evaporation of the volatile contents of the topcoat composition according to any of claims 7 to 12 at ambient conditions.
